# EUROPÄISCHE PATENTSCHRIFT

(11) **EP 3 380 272 B1**
(45) Veröffentlichungstag und Bekanntmachung des Hinweises auf die Patenterteilung: **05.07.2023**
(21) Anmeldenummer: 16797871.7
(22) Anmeldetag: 16.11.2016
(51) Int. Cl.: B24B 55/05, B24B 23/02, B23Q 11/06, B24B 27/08

(54) **TRAGBARE, HANDGEFÜHRTE TRENNSCHLEIFMASCHINE**
PORTABLE, HAND HELD CUTTING-OFF MACHINE
TRONÇONNEUSE PORTATIVE MANUELLE

(30) Priorität: 25.11.2015 EP 15196161
(43) Veröffentlichungstag der Anmeldung: 03.10.2018
(60) Teilanmeldung: 23170766.2
(73) Patentinhaber: Hilti Aktiengesellschaft, 9494 Schaan (LI)
(72) Erfinder: GREITMANN, Ralf, 86916 Kaufering (DE); VEIK, Guenther, 6841 Mäder (AT); SPECHT, Helmut, 86825 Bad Wörishofen (DE)
(74) Vertreter: Hilti Aktiengesellschaft Corporate Intellectual Property
(86) Internationale Anmeldenummer: PCT/EP2016/077831
(87) Internationale Veröffentlichungsnummer: WO 2017/089192

(56) Entgegenhaltungen:
- EP-A1- 1 053 829
- EP-A1- 1 609 572
- DE-B3-102004 035 876
- DE-B4-102005 049 766
- US-A- 3 701 369
- US-A1- 2003 075 028
- US-A1- 2012 011 731

## Beschreibung

### Technisches Gebiet

Die vorliegende Erfindung betrifft eine tragbare, handgeführte Trennschleifmaschine gemäß dem Oberbegriff des Anspruchs 1.

### Stand der Technik

Trennschleifmaschinen sind tragbare, handgeführte Werkzeuggeräte mit einem Bearbeitungswerkzeug, das in Form einer rotierenden Trennschleifscheibe ausgebildet ist. Die wesentlichen Komponenten einer Trennschleifmaschine umfassen neben der Trennschleifscheibe ein tragendes Gehäuseteil, eine Abtriebswelle, die um eine Abtriebsachse drehbar gelagert ist, einen Antriebsmotor, eine Übertragungseinrichtung, die den Antriebsmotor mit der Abtriebswelle verbindet, einen Flansch und eine Schutzhaube, die die Trennschleifscheibe über einen Abdeckbereich abdeckt. Die Trennschleifscheibe ist mittels des Flansches drehfest auf der Abtriebswelle montiert und von der Schutzhaube umgeben, die um eine Schwenkachse schwenkbar gelagert ist. Dabei ist die Schwenkachse der Schutzhaube koaxial zur Abtriebsachse, die der Drehachse der Trennschleifscheibe entspricht, angeordnet. DE 10 2005 049 766 B4 offenbart eine solche tragbare, handgeführte Trennschleifmaschine, gemäß dem Oberbegriff von Anspruch 1.

Die Europäische Norm EN ISO 19432:2012 und die US-Norm ANSI B175.4-2013 legen Sicherheitsanforderungen und Maßnahmen für die Prüfung des konstruktiven Aufbaus von tragbaren, handgeführten Trennschleifmaschinen mit eingebautem Verbrennungsmotor für den Einmannbetrieb fest, die zum Schneiden von Baumaterialien, wie zum Beispiel Asphalt, Beton, Stein und Metall, bestimmt sind, und gelten für Trennschleifmaschinen, die für den Einsatz mit einer rotierenden Trennschleifscheibe mit Trennschleifkörpern aus gebundenen Schleifmitteln und/oder Schleifwerkzeugen mit Diamant- und CBN-Schleifmitteln vorgesehen sind, die mittig auf einer Spindelwelle montiert sind und von dieser angetrieben werden, wobei sich die Stirnseite der Trennschleifscheibe in einer vom Anwender abgewandten Richtung dreht. Die Normen definieren in Abhängigkeit vom Typ und vom Scheibendurchmesser einer Trennschleifscheibe einen Mindestflanschdurchmesser für den Flansch. Beim Typ der Trennschleifscheiben wird zwischen Diamant-Trennschleifscheiben und abrasiven Trennschleifscheiben unterschieden und beim Scheibendurchmesser D der Trennschleifscheiben werden vier Bereiche (D ≤ 250 mm, 250 mm < D ≤ 300 mm, 300 mm < D ≤ 350 mm und 350 mm < D) unterschieden. Die Europäische Norm EN ISO 19432:2012 gilt für Trennschleifscheiben mit einem maximalen Scheibendurchmesser von 400 mm und die US-Norm ANSI B175.4-2013 gilt für Trennschleifscheiben mit einem maximalen Scheibendurchmesser von 406 mm.

Die Europäische Norm EN IEC 60745-2-22:2011 und die US-Norm ANSI/UL 60745-2-22-2012 gelten für handgeführte, motorbetriebene Elektrowerkzeuge in Form von Trennschleifmaschinen, die zum Trennschneiden von Werkstoffen wie Metall, Beton, Mauerwerk, Glas und Fliesen mit einer rotierenden Trennschleifscheibe mit Scheibendurchmessern von 55 mm bis 410 mm vorgesehen sind. Die Normen definieren in Abhängigkeit vom Typ, vom Scheibendurchmesser D und vom Bohrungsdurchmesser Ø einer Trennschleifscheibe einen Mindestflanschdurchmesser für den Flansch. Beim Typ der Trennschleifscheiben wird zwischen Diamant-Trennschleifscheiben und gebundenen verstärkten Trennschleifscheiben des Typs 41 oder 42 unterschieden. Der Mindestflanschdurchmesser dₘᵢₙ beträgt dₘᵢₙ = 0.15 ∗ D für Diamant-Trennschleifscheiben mit einem Scheibendurchmesser D von 55 mm ≤ D ≤ 410 mm. Für gebundene verstärkte Trennschleifscheiben des Typs 41 oder 42 werden beim Scheibendurchmesser D vier Bereiche (55 mm ≤ D < 80 mm, 80 mm ≤ D < 105 mm, 105 mm ≤ D ≤ 230 mm und 230 mm < D ≤ 410 mm) unterschieden und für Scheibendurchmesser D mit 80 mm ≤ D < 105 mm werden Bohrungsdurchmesser Ø von 10 mm und 16 mm unterschieden.

Die maximale Schnitttiefe, die eine Trennschleifscheibe in einem Werkstück erzielen kann, ist durch die halbe Differenz aus dem Scheibendurchmesser der Trennschleifscheibe und dem zugeordneten Mindestflanschdurchmesser des Flansches festgelegt. In der Praxis werden bei Trennschleifmaschinen mit einem Verbrennungsmotor vor allem Diamant-Trennschleifscheiben mit Scheibendurchmessern von 300 mm und 350 mm eingesetzt. Die maximale Schnitttiefe, die eine Diamant-Trennschleifscheibe mit einem Scheibendurchmesser von 300 mm erzielen kann, beträgt 127.5 mm und die maximale Schnitttiefe, die eine Diamant-Trennschleifscheibe mit einem Scheibendurchmesser von 350 mm erzielen kann, beträgt 148.75 mm.

Die tatsächlichen Schnitttiefen, die bekannte Trennschleifmaschinen in einem Werkstück erzielen, sind kleiner als die genannten maximalen Schnitttiefen, die durch die halbe Differenz aus dem Scheibendurchmesser und dem Mindestflanschdurchmesser festgelegt sind. Der Gerätehersteller Stihl bietet verschiedene Trennschleifmaschinen mit Verbrennungsmotor an, unter anderem die Trennschleifmaschinen TS 400, TS 410 und TS 420. Die TS 400-Trennschleifmaschinen sind für Diamant-Trennschleifscheiben vorgesehen und können mit unterschiedlichen Scheibendurchmessern von 300 mm und 350 mm betrieben werden. Die Schnitttiefe, die die TS 400-Trennschleifmaschine mit einem Scheibendurchmesser von 300 mm erreicht, beträgt laut Herstellerangaben 100 mm und die maximale Schnitttiefe, die die TS 400-Trennschleifmaschine mit einem Scheibendurchmesser von 350 mm erreicht, beträgt laut Herstellerangaben 125 mm. Die TS 410-Trennschleifmaschinen sind für Diamant-Trennschleifscheiben mit einem Scheibendurchmesser von 300 mm und die TS 420-Trennschleifmaschinen für Diamant-Trennschleifscheiben mit einem Scheibendurchmesser von 350 mm vorgesehen. Die maximale Schnitttiefe, die die TS 410-Trennschleifmaschine erreicht, beträgt laut Herstellerangaben 100 mm und die maximale Schnitttiefe, die die TS 420-Trennschleifmaschine erreicht, beträgt laut Herstellerangaben 125 mm.

Die Schnitttiefen, die die TS 400-Trennschleifmaschine mit einem Scheibendurchmesser von 300 mm und die TS 410-Trennschleifmaschine erzielen, sind 20 % geringer als die maximale Schnitttiefe von 127.5 mm und die Schnitttiefen, die die TS 400-Trennschleifmaschine mit einem Scheibendurchmesser von 350 mm und die TS 420-Trennschleifmaschine erzielen, sind ca. 16 % geringer als die maximale Schnitttiefe von 148.75 mm. Die Flansche, die Stihl bei den Trennschleifern TS 400, TS 410 und TS 420 einsetzt, weisen einen Flanschdurchmesser von mindestens 103 mm auf. Bei den TS 400-Trennschleifmaschinen, die mit unterschiedlichen Scheibendurchmessern von 300 mm und 350 mm betrieben werden können, ist für die unterschiedlichen Scheibendurchmesser der gleiche Flanschdurchmesser von mindestens 103 mm vorgesehen. Die eingesetzten Flanschdurchmesser sind sehr viel grösser als die Mindestflanschdurchmesser dₘᵢₙ, die die Europäische Norm EN ISO 19432:2012 und die US-Norm ANSI B175.4-2013 für Diamant-Trennschleifscheiben mit einem Scheibendurchmesser von 300 mm (dₘᵢₙ ≥ 45 mm) und einem Scheibendurchmesser von 350 mm (dₘᵢₙ ≥ 52.5 mm) fordern. Die Normen gelten für Trennschleifmaschinen, die am oder nach dem Veröffentlichungstag der Normen hergestellt wurden und nicht für Trennschleifmaschinen, die vor dem Veröffentlichungstag der Normen hergestellt wurden. Auch die vorherigen Versionen der Normen haben für Diamant-Trennschleifscheiben mit Scheibendurchmesser von 300 mm und 350 mm die gleichen Mindestflanschdurchmesser von 45 mm und 52.5 mm festgelegt.

US 2003/075028 A1 offenbart eine weitere bekannte tragbare, handgeführte Trennschleifmaschine, die eine Trennschleifscheibe, ein tragendes Gehäuseteil, eine Abtriebswelle, einen Antriebsmotor, eine Übertragungseinrichtung, einen Flansch und eine Schutzhaube umfasst. Allerdings ist die Schutzhaube nicht schwenkbar ausgebildet. Die Trennschleifmaschine umfasst eine bewegliche Werkzeugabdeckung, die über einen Bolzen an der Schutzhaube schwenkbar gelagert ist.

In der US 3 701 369 A wird eine Kreissäge mit einem beweglichen Blattschutz offenbart, wobei der Blattschutz um eine Achse rotieren kann, die nicht mit der Rotationsachse des Sägeblatts zusammenfällt.

Die US 2012 0011 731 A1 beschreibt eine tragbare Schneidemaschine mit einem Sägeblatt, das um eine erste Achse rotieren kann, während ein unterer Blattschutz um eine zweite Achse rotiert, wobei die beiden Achsen parallel zueinander verlaufen.

### Darstellung der Erfindung

Die Aufgabe der vorliegenden Erfindung besteht darin, eine tragbare, handgeführte Trennschleifmaschine dahingehend weiterzuentwickeln, dass die Schnitttiefe, die mit einer Trennschleifscheibe in einem Werkstück erreichbar ist, gegenüber den bekannten Trennschleifmaschinen vergrößert wird und möglichst die maximale Schnitttiefe, die durch die halbe Differenz aus dem Scheibendurchmesser der Trennschleifscheibe und dem Mindestflanschdurchmesser des Flansches festgelegt ist, erreicht wird.

Diese Aufgabe wird bei der eingangs genannten tragbaren, handgeführten Trennschleifmaschine erfindungsgemäß durch die Merkmale des unabhängigen Anspruchs 1 gelöst. Vorteilhafte Weiterbildungen sind in den abhängigen Ansprüchen angegeben.

Erfindungsgemäß ist die tragbare, handgeführte Trennschleifmaschine dadurch gekennzeichnet, dass die Schwenkachse der Schutzhaube von der Abtriebsachse der Abtriebswelle um einen Abstand verschoben ist. Bei einer Schutzhaube, die um eine Schwenkachse schwenkbar ausgebildet ist, ist ein weiteres Lagerelement zur schwenkbaren Lagerung der Schutzhaube erforderlich. Durch die Verschiebung der Schwenkachse gegenüber der Abtriebsachse lassen sich die Komponenten der Trennschleifmaschine, die im Bereich der Abtriebswelle angeordnet sind, besser im verfügbaren Raum verteilen und dadurch die Schnitttiefe vergrößern. Zu den Komponenten, die im Bereich der Abtriebswelle angeordnet sind, gehören ein Lager für die Abtriebswelle, die Schutzhaube, das tragende Gehäuseteil und die Übertragungseinrichtung.

Die Schnitttiefe, die eine Trennschleifscheibe in einem Werkstück erzielen kann, ist durch die halbe Differenz aus dem Scheibendurchmesser der eingesetzten Trennschleifscheibe und dem Flanschdurchmesser des eingesetzten Flansches festgelegt, wobei diese Schnitttiefe nur erreicht wird, wenn keine Komponenten der Trennschleifmaschine die Schnitttiefe zusätzlich begrenzen. Die Schutzhaube besteht aus dem Abdeckbereich, der die Trennschleifscheibe abdeckt, und dem Bearbeitungsbereich, der die Trennschleifscheibe für die Bearbeitung eines Werkstückes freigibt. Im Bearbeitungsbereich der Schutzhaube ist durch den Flansch mit dem Flanschdurchmesser ein Aufnahmebereich definiert, der für die Anordnung und Lagerung der Komponenten (Schutzhaube, tragendes Gehäuseteil und Übertragungseinrichtung) zur Verfügung steht. Wenn die Trennschleifmaschine die Schnitttiefe, die durch die halbe Differenz aus dem Scheibendurchmesser der eingesetzten Trennschleifscheibe und dem Flanschdurchmesser des eingesetzten Flansches festgelegt ist, erzielen soll, müssen alle Komponenten der Trennschleifmaschine über einen begrenzten Winkelbereich in den Aufnahmebereich verlegt werden.

Um die Schnitttiefe einer Trennschleifscheibe zu vergrößern, wird ein Flansch mit möglichst kleinem Flanschdurchmesser eingesetzt. Je kleiner der Flanschdurchmesser ausgewählt wird, umso kleiner ist der Aufnahmebereich für die Anordnung und Lagerung der Komponenten. Daher ist eine optimale Anordnung der Komponenten besonders wichtig, wenn ein möglichst kleiner Flanschdurchmesser eingesetzt werden soll. Besonders kritisch ist die Lagerung der Schutzhaube. Die Schutzhaube weist einen Befestigungsflansch auf, der mit einer Seitenwand der Schutzhaube verbunden ist. Der Befestigungsflansch wird auf eine passende Gegenkontur des tragenden Gehäuseteils aufgesteckt und ist zur Gegenkontur um die Schwenkachse verstellbar ausgebildet. Fällt die Schwenkachse der Schutzhaube mit der Abtriebsachse der Abtriebswelle zusammen, ist der Durchmesser des Befestigungsflansches durch den Flanschdurchmesser begrenzt. Durch die Verschiebung der Schwenkachse kann der Durchmesser des Befestigungsflansches grösser als der Flanschdurchmesser ausgewählt werden.

Erfindungsgemäß ist darüber hinaus vorgesehen, dass die Schwenkachse der Schutzhaube gegenüber der Abtriebsachse der Abtriebswelle in den Abdeckbereich der Schutzhaube verschoben ist. Die Schutzhaube besteht aus dem Abdeckbereich, der die Trennschleifscheibe abdeckt, und dem Bearbeitungsbereich, der die Trennschleifscheibe für die Bearbeitung eines Werkstückes freigibt. Um mit einer Trennschleifscheibe eine möglichst große Schnitttiefe zu erzielen, wird ein Flansch mit einem möglichst kleinen Flanschdurchmesser eingesetzt. Je kleiner der Flanschdurchmesser ausgewählt wird, umso kleiner ist der Aufnahmebereich für die Anordnung und Lagerung der Komponenten (Lager für die Abtriebswelle, Schutzhaube, tragendes Gehäuseteil und Übertragungseinrichtung), wobei die Lagerung der Schutzhaube besonders kritisch ist. Der Durchmesser des Befestigungsflansches ist eine Größe, die bei schwenkbaren Schutzhauben, die über Reibschluss verstellbar sind, im Wesentlichen durch die Größe und das Gewicht der Schutzhaube festgelegt ist. Durch die Verschiebung der Schwenkachse in den Abdeckbereich der Schutzhaube kann der Durchmesser des Befestigungsflansches grösser als der Flanschdurchmesser des eingesetzten Flansches ausgewählt werden.

Besonders bevorzugt weist die Schutzhaube einen Befestigungsflansch mit einem Durchmesser auf und der Abstand zwischen der Schwenkachse und der Abtriebsachse ist grösser oder gleich der halben Differenz aus dem Durchmesser des Befestigungsflansches und dem Flanschdurchmesser. Der Befestigungsflansch ist die Teilkomponente der Schutzhaube, über die die Schutzhaube schwenkbar ausgebildet ist. Der Befestigungsflansch wird auf eine passende Gegenkontur des tragenden Gehäuseteils aufgesteckt und ist zur Gegenkontur um die Schwenkachse verstellbar ausgebildet. Der Durchmesser des Befestigungsflansches ist eine Größe, die im Wesentlichen durch die Größe und das Gewicht der Schutzhaube festgelegt ist. Wenn der Abstand zwischen der Schwenkachse und der Abtriebsachse grösser oder gleich der halben Differenz aus dem Durchmesser des Befestigungsflansches und dem Flanschdurchmesser ausgewählt ist, befindet sich der Befestigungsflansch der Schutzhaube im Outcut-Winkel innerhalb des Aufnahmebereichs, der durch den Flansch mit dem Flanschdurchmesser definiert ist.

In einer bevorzugten Ausführungsform weisen die Schutzhaube einen ersten Maximalabstand zur Abtriebsachse, das tragende Gehäuseteil einen zweiten Maximalabstand zur Abtriebsachse und die Übertragungseinrichtung einen dritten Maximalabstand zur Abtriebsachse über einen Outcut-Winkel auf, wobei der erste, zweite und dritte Maximalabstand kleiner als der halbe Flanschdurchmesser oder gleich dem halben Flanschdurchmesser sind. Die äußeren Begrenzungen der Komponenten der Trennschleifmaschine, die als Schutzhaube, tragendes Gehäuseteil und Übertragungseinrichtung ausgebildet sind, werden als Außenkonturen bezeichnet und die Abstände zur Abtriebsachse entsprechen den maximalen Abständen der Außenkonturen zur Abtriebsachse im Outcut-Winkel; außerhalb des Outcut-Winkels sind die Abstände der Außenkonturen zur Abtriebsachse grösser oder gleich dem halben Flanschdurchmesser. Dadurch, dass die Außenkonturen der Komponenten der Trennschleifmaschine im Outcut-Winkel so gestaltet sind, dass ihre Abstände zur Abtriebsachse kleiner als der halbe Flanschdurchmesser oder gleich dem halben Flanschdurchmesser sind, kann im Outcut-Winkel die Schnitttiefe, die durch die halbe Differenz aus dem Scheibendurchmesser und dem Flanschdurchmesser festgelegt ist, erzielt werden. Die Schnitttiefe der erfindungsgemäßen Trennschleifmaschine ist im Outcut-Winkel gegenüber den bekannten Trennschleifmaschinen erhöht.

Bevorzugt weist die Übertragungseinrichtung eine Abtriebsscheibe, die auf der Abtriebswelle angeordnet ist, und ein Übertragungselement, das eine Bewegung des Antriebsmotors auf die Abtriebsscheibe überträgt, auf, wobei die Abtriebsscheibe einen vierten Maximalabstand zur Abtriebsachse und das Übertragungselement einen fünften Maximalabstand zur Abtriebsachse über den Outcut-Winkel aufweisen, wobei der vierte und fünfte Maximalabstand kleiner oder gleich dem halben Flanschdurchmesser sind. Die Übertragungseinrichtung zählt zu den Komponenten der Trennschleifmaschine, die im Outcut-Winkel angeordnet sind. Die Bedingung, dass der Maximalabstand der Übertragungseinrichtung zur Abtriebsachse im Outcut-Winkel kleiner oder gleich dem halben Mindestflanschdurchmesser ist, muss für sämtliche Teilkomponenten der Übertragungseinrichtung erfüllt sein. Dazu gehören die Abtriebsscheibe, die auf der Abtriebswelle angeordnet ist, und das Übertragungselement, das auf der Abtriebsscheibe angeordnet ist.

Besonders bevorzugt weist die Übertragungseinrichtung eine Abdeckung auf, wobei die Abdeckung über den Outcut-Winkel einen sechsten Maximalabstand zur Abtriebsachse aufweist, der kleiner oder gleich dem halben Flanschdurchmesser ist. Bei den Teilkomponenten der Übertragungseinrichtung, die als Abtriebsscheibe und Übertragungselement ausgebildet sind, handelt es sich um rotierende Bauteile, die aus Sicherheitsanforderungen abgedeckt werden müssen.

In einer bevorzugten Weiterentwicklung der erfindungsgemäßen Trennschleifmaschine entspricht der Flanschdurchmesser des Flansches einem Mindestflanschdurchmesser, wobei der Mindestflanschdurchmesser abhängig vom Typ des Antriebsmotors sowie abhängig von Typ, Scheibendurchmesser und Bohrungsdurchmesser der Trennschleifscheibe vorgegeben ist. Als Mindestflanschdurchmesser sind die Flanschdurchmesser definiert, die in den jeweils geltenden Normen als untere Grenzwerte für den Flansch festgelegt sind. Der Mindestflanschdurchmesser ist unter anderem abhängig vom Typ des Antriebsmotors, vom Typ der Trennschleifscheibe,vom Scheibendurchmesser der Trennschleifscheibe und vom Bohrungsdurchmesser der Trennschleifscheibe. Wenn der Flanschdurchmesser des eingesetzten Flansches dem vorgegebenen Mindestflanschdurchmesser entspricht, kann mit einer Trennschleifscheibe die maximale Schnitttiefe erzielt werden, wobei die maximale Schnitttiefe einer Trennschleifscheibe durch die halbe Differenz aus dem Scheibendurchmesser der Trennschleifscheibe und dem Mindestflanschdurchmesser festgelegt ist. Die erfindungsgemäße Trennschleifmaschine hat den Vorteil, dass die Schnitttiefe gegenüber den bekannten Trennschleifmaschinen vergrößert ist und die maximale Schnitttiefe erzielt wird. Mit einem Scheibendurchmesser von 300 mm wird bei der erfindungsgemäßen Trennschleifmaschine mit Verbrennungsmotor und einer Diamant-Trennschleifscheibe eine Schnitttiefe erzielt, für die bei bekannten Trennschleifmaschinen mit Verbrennungsmotor, wie den Trennschleifmaschinen TS 400 und TS 410 der Firma Stihl, eine Diamant-Trennschleifscheibe mit einem Scheibendurchmesser von 350 mm erforderlich ist.

In einer bevorzugten ersten Variante der erfindungsgemäßen Trennschleifmaschine ist der Antriebsmotor als Verbrennungsmotor ausgebildet und die Trennschleifscheibe ist als Diamant-Trennschleifscheibe oder als abrasive Trennschleifscheibe ausgebildet. Für Trennschleifmaschinen mit Verbrennungsmotor gilt in Europa die Europäische Norm EN ISO 19432:2012 und in USA die US-Norm ANSI B175.4-2013. In anderen Ländern oder Regionen außerhalb von Europa und USA gelten vergleichbare Normen und in europäischen Ländern kann die Europäische Norm in nationale Normen umgesetzt sein. Der Mindestflanschdurchmesser dₘᵢₙ beträgt für erfindungsgemäße Trennschleifmaschinen mit einem Verbrennungsmotor und einer Diamant-Trennschleifscheibe: dₘᵢₙ = 37.5 mm für D ≤ 250 mm, dₘᵢₙ = 45 mm für 250 mm < D ≤ 300 mm, dₘᵢₙ = 52.5 mm für 300 mm < D ≤ 350 mm und dₘᵢₙ = 60 mm für 350 mm < D. Der Mindestflanschdurchmesser dₘᵢₙ beträgt für Trennschleifmaschinen mit einem Verbrennungsmotor und einer abrasiven Trennschleifscheibe: dₘᵢₙ = 63.5 mm für D ≤ 250 mm, dₘᵢₙ = 75 mm für 250 mm < D ≤ 300 mm, dₘᵢₙ = 87.5 mm für 250 mm < D ≤ 350 mm und dₘᵢₙ = 100 mm für 350 mm < D.

Eine erfindungsgemäße Trennschleifmaschine mit Verbrennungsmotor und einer Diamant-Trennschleifscheibe erzielt bei einem Scheibendurchmesser von 250 mm eine maximale Schnitttiefe von 106.25 mm (½ * (250 mm - 37.5 mm)), bei einem Scheibendurchmesser von 300 mm eine maximale Schnitttiefe von 127.5 mm (½ * (300 mm - 45 mm)), bei einem Scheibendurchmesser von 350 mm eine maximale Schnitttiefe von 148.75 mm (½ * (350 mm - 52.5 mm)) und bei einem Scheibendurchmesser von 400 mm eine maximale Schnitttiefe von 170 mm (½ * (400 mm - 60 mm)). Eine erfindungsgemäße Trennschleifmaschine mit Verbrennungsmotor und einer abrasiven Trennschleifscheibe erzielt bei einem Scheibendurchmesser von 250 mm eine maximale Schnitttiefe von 93.25 mm (½ * (250 mm - 63.5 mm)), bei einem Scheibendurchmesser von 300 mm eine maximale Schnitttiefe von 112.5 mm (½ * (300 mm - 75 mm)), bei einem Scheibendurchmesser von 350 mm eine maximale Schnitttiefe von 131.25 mm (½ * (350 mm - 87.5 mm)) und bei einem Scheibendurchmesser von 400 mm eine maximale Schnitttiefe von 150 mm (½ * (400 mm - 100 mm)).

In einer bevorzugten zweiten Variante der erfindungsgemäßen Trennschleifmaschine ist der Antriebsmotor als Elektromotor ausgebildet und die Trennschleifscheibe ist als Diamant-Trennschleifscheibe oder als gebundene verstärkte Trennschleifscheibe des Typs 41 oder 42 ausgebildet. Für Trennschleifmaschinen mit Elektromotor gilt in Europa die Europäische Norm EN IEC 60745-2-22:2011 und in USA die US-Norm ANSI/UL 60745-2-22-2012. In anderen Ländern oder Regionen außerhalb von Europa und USA gelten vergleichbare Normen und in europäischen Ländern kann die Europäische Norm in nationale Normen umgesetzt sein. Der Mindestflanschdurchmesser dₘᵢₙ beträgt für erfindungsgemäße Trennschleifmaschinen mit einem Elektromotor und einer Diamant-Trennschleifscheibe: dₘᵢₙ = 0.15 ∗ D für 55 mm ≤ D ≤ 410 mm. Der Mindestflanschdurchmesser dₘᵢₙ beträgt für erfindungsgemäße Trennschleifmaschinen mit einem Elektromotor und einer gebundenen verstärkten Trennschleifscheibe des Typs 41 oder 42: dₘᵢₙ = 19 mm für 55 mm ≤ D < 80 mm, dₘᵢₙ = 19 mm bei QJ=10 mm und dₘᵢₙ = 28 mm bei Ø = 16 mm für 80 mm ≤ D < 105 mm, dₘᵢₙ = 40 mm für 105 mm ≤ D ≤ 230 mm und dₘᵢₙ = 0.25 ∗ D für 230 mm < D ≤ 410 mm.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIGN. 1A,: B eine erfindungsgemäße tragbare, handgeführte Trennschleifmaschine mit einer Trennschleifscheibe;
- FIGN. 2A,: B eine Schutzhaube und einen Riemenantrieb der in FIGN. 1A, B gezeigten Trennschleifmaschine mit einer Abdeckung (FIG. 2A) und ohne Abdeckung (FIG. 2B);
- FIGN. 3A-C: die Trennschleifscheibe und die Schutzhaube der Trennschleifmaschine der FIG. 1A in einer Seitenansicht (FIG. 3A) sowie in einem ersten Schnitt entlang der Schnittlinie A-A (FIG. 3B) und in einem zweiten Schnitt entlang der Schnittlinie B-B (FIG. 3C);
- FIG. 4: einen vergrösserten Ausschnitt des zweiten Schnittes der FIG. 3C; und
- FIG. 5: die Schutzhaube und ein Tragarmgehäuse des Riemenantriebes, wobei die Schnitttiefe über einen Outcut-Winkel der maximalen Schnitttiefe entspricht.

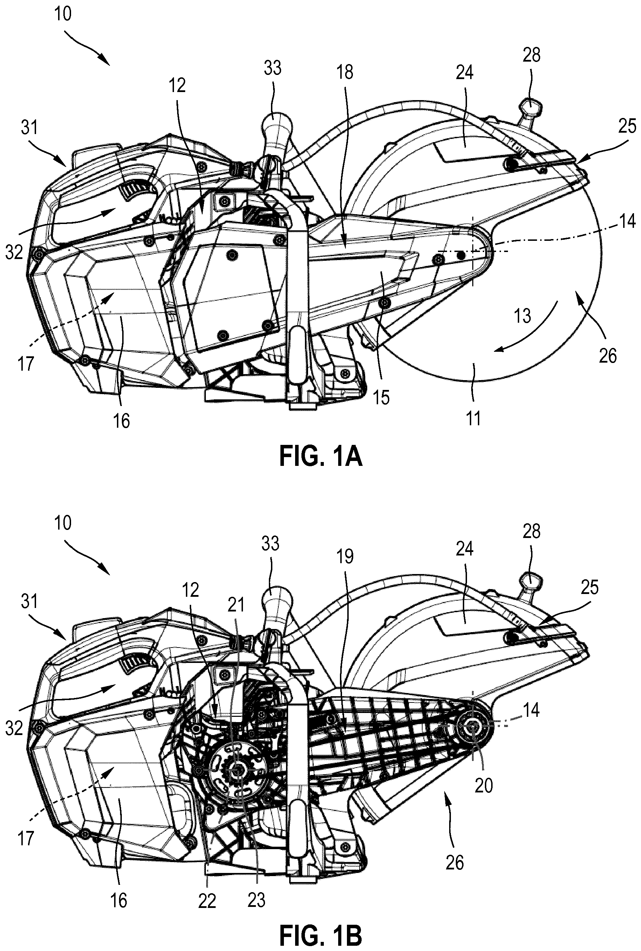

**FIGN. 1A****, B** zeigen ein erfindungsgemäßes tragbares, handgeführtes Werkzeuggerät **10,** das in Form einer Trennschleifmaschine ausgebildet ist. Die Trennschleifmaschine 10 weist ein als Trennschleifscheibe **11** ausgebildetes Bearbeitungswerkzeug auf, das von einer Antriebseinrichtung **12** in einer Drehrichtung **13** um eine Drehachse **14** angetrieben wird. Dabei werden als Antriebseinrichtung 12 sämtliche Antriebskomponenten für die Trennschleifscheibe 11 zusammengefasst. Bei der in FIG. 1B dargestellten Trennschleifmaschine 10 wurde eine Abdeckung **15** entfernt, so dass zumindest einige Antriebskomponenten der Antriebseinrichtung 12 sichtbar sind. Die Abdeckung 15 kann einteilig oder mehrteilig ausgebildet sein und wird über Schrauben an der Trennschleifmaschine 10 befestigt.

Die Antriebseinrichtung 12 umfasst einen in einem Motorgehäuse **16** angeordneten Antriebsmotor **17,** eine in einem Tragarm **18** angeordnete Übertragungseinrichtung, die als Riemenantrieb **19** ausgebildet ist, und eine Abtriebswelle **20,** auf der die Trennschleifscheibe 11 montiert ist. Bei Bedarf können weitere Getriebekomponenten zwischen dem Antriebsmotor 17 und dem Riemenantrieb 19 geschaltet sein. Zwischen dem Antriebsmotor 17 und dem Riemenantrieb 19 kann eine Fliehkraftkupplung angeordnet sein, die dafür sorgt, dass sich die Trennschleifscheibe 11 bei geringen Drehzahlen, wie im Leerlauf oder beim Starten des Trennschleifers 10, nicht dreht. Die Fliehkraftkupplung weist eine Kupplungsglocke auf, gegen die Fliehgewichte im Betrieb aufgrund der Fliehkraft nach außen gedrückt werden. Der Antriebsmotor 17 treibt eine Antriebswelle **21** um eine Antriebsachse **22** an. Die Kupplungsglocke der Fliehkraftkupplung ist drehfest mit einer auf der Antriebswelle 21 drehbar gelagerten Antriebsscheibe **23** verbunden.

Als Antriebsmotoren 17 für die Trennschleifmaschine 10 werden Verbrennungsmotoren oder Elektromotoren eingesetzt. Unter dem Begriff "Elektromotor" werden sämtliche Antriebsmotoren für motorbetriebene Elektrowerkzeuge zusammengefasst, wobei die Elektrowerkzeuge leitungsgebunden mit einer direkten Verbindung zum Stromnetz oder leitungsungebunden ohne direkte Verbindung zum Stromnetz ausgebildet sein können. Trennschleifmaschinen mit einem Verbrennungsmotor können mit verschiedenen Typen von Trennschleifscheiben 11 verwendet werden, Diamant-Trennschleifscheiben und abrasive Trennschleifscheiben, wobei die Trennschleifscheiben Trennschleifkörper aus gebundenen Schleifmitteln und/oder Schleifwerkzeugen mit Diamant- und CBN-Schleifmitteln umfassen. Trennschleifmaschinen mit einem Elektromotor können mit verschiedenen Typen von Trennschleifscheiben 11 verwendet werden, Diamant-Trennschleifscheiben und gebundene verstärkte Trennschleifscheiben des Typs 41 oder 42.

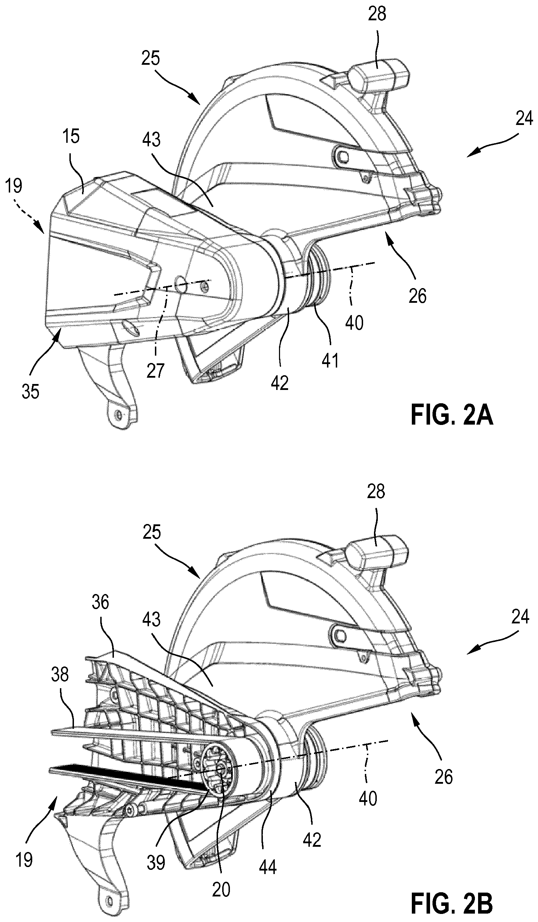

Die Trennschleifscheibe 11 ist von einer Schutzhaube **24** umgeben, die zum Schutz des Bedieners vor umherfliegenden Staubpartikeln dient und außerdem die Verletzungsgefahr reduziert, dass der Bediener im Betrieb der Trennschleifmaschine 10 in die rotierende Trennschleifscheibe 11 greift. Die Schutzhaube 24 ist in einem Nabenbereich der Trennschleifscheibe 11 befestigt und besteht aus einem Abdeckbereich **25,** der die Trennschleifscheibe 11 über einen Abdeckwinkel von ca. 200 ° abdeckt, und einem Bearbeitungsbereich **26,** der die Trennschleifscheibe 11 über einen Bearbeitungswinkel von ca. 160 ° für die Bearbeitung eines Werkstückes freigibt. Die Schutzhaube 24 ist schwenkbar ausgebildet und kann um eine Schwenkachse **27** (FIGN. 2A, B) in eine gewünschte Schwenkposition geschwenkt werden. Zur Einstellung der Schwenkposition ist an der Schutzhaube 24 ein Griffelement **28** befestigt, mit dem die erforderlichen Kräfte aufgebracht werden können, um die Schutzhaube 24 um die Schwenkachse 27 zu schwenken.

Zur Bedienung der Trennschleifmaschine 10 ist ein erster Handgriff **31** vorgesehen, der eine Bedienungseinrichtung **32** aufweist und als Top-Handle ausgebildet ist. Als Top-Handle wird ein Handgriff bezeichnet, der oberhalb des Motorgehäuses 16 angeordnet ist. Alternativ kann der erste Handgriff als Rear-Handle, der auf der der Trennschleifscheibe 11 abgewandten Seite des Motorgehäuses 16 angeordnet ist, ausgebildet sein. Zur Führung der Trennschleifmaschine 10 ist neben dem ersten Handgriff 31 ein zweiter Handgriff **33** vorgesehen, der zwischen der Trennschleifscheibe 11 und dem ersten Handgriff 31 angeordnet ist. Der zweite Handgriff 33 ist in dem in FIGN. 1A, B gezeigten Ausführungsbeispiel als separates Griffrohr ausgebildet oder kann alternativ einteilig mit dem Motorgehäuse 16 oder einem anderen Gehäuseteil ausgebildet sein.

**FIGN. 2A****, B** zeigen die Schutzhaube 24 und den Riemenantrieb 19 der Trennschleifmaschine 10 der FIGN. 1A, B in einer vergrößerten Darstellung. Der Riemenantrieb 19 ist in einem Tragarmgehäuse **35** angeordnet, das ein feststehendes tragendes Gehäuseteil **36** und die Abdeckung 15 umfasst. FIG. 2A zeigt den Riemenantrieb 19 mit montierter Abdeckung 15 und FIG. 2B den Riemenantrieb 19 ohne Abdeckung 15.

Der Antrieb der Trennschleifscheibe 11 erfolgt über den Antriebsmotor 17, den Riemenantrieb 19 und die Abtriebswelle 20. Der Antriebsmotor 17 kann als Verbrennungsmotor oder als Elektromotor ausgebildet sein. Der Antriebsmotor 17 treibt die Antriebswelle 21 und die Antriebsscheibe 23 um die Antriebsachse 22 an. Ein als Antriebsriemen ausgebildetes Übertragungselement **38** ist über die Antriebsscheibe 23 und eine auf der Abtriebswelle 20 gelagerte Abtriebsscheibe **39** geführt. Die Abtriebswelle 20 ist um eine Abtriebsachse **40** drehbar, die mit der Drehachse 14 der Trennschleifscheibe 11 zusammen fällt. Die Antriebsscheibe 23, der Antriebsriemen 38 und die Abtriebsscheibe 39 bilden den Riemenantrieb 19. Die Übertragungseinrichtung 19 kann alternativ beispielsweise in Form eines Kettenantriebes ausgebildet sein, bei dem das Übertragungselement zwischen der Antriebsscheibe 23 und der Abtriebsscheibe 39 als Kette ausgebildet ist. Die Trennschleifscheibe 11 wird mittels eines Flansches **41** auf der Abtriebswelle 20 angeordnet und drehfest mit der Abtriebswelle 20 verbunden. Der Flansch 41 und die Trennschleifscheibe 11 werden auf der Abtriebswelle 20 montiert und die Trennschleifscheibe 11 wird zwischen zwei Flanschhälften des Flansches 41 angeordnet.

Die Bearbeitung eines Werkstückes mit der Trennschleifmaschine 10 erfolgt in dem Bereich der Trennschleifscheibe 11, der im Bearbeitungsbereich 26 der Schutzhaube 24 liegt. Die Schutzhaube 24 weist im Nabenbereich der Trennschleifscheibe 11 einen Befestigungsflansch **42** auf, der im Ausführungsbeispiel einteilig mit einer Seitenwand **43** der Schutzhaube 24 ausgebildet ist; alternativ kann der Befestigungsflansch als separates Teil ausgebildeten sein und mit der Schutzhaube 24 verbunden werden. Der Befestigungsflansch 42 ist auf eine passende Gegenkontur **44** des feststehenden Gehäuseteils 36 aufgesteckt und zur Gegenkontur 44 des Gehäuseteils 36 verstellbar ausgebildet. Die Schutzhaube 24 ist um die Schwenkachse 27 zwischen einer vorderen Schwenkposition und einer hinteren Schwenkposition schwenkbar ausgebildet. Der Schwenkbereich der Schutzhaube 24 ist auf einen Winkelbereich von ca. 60 ° begrenzt.

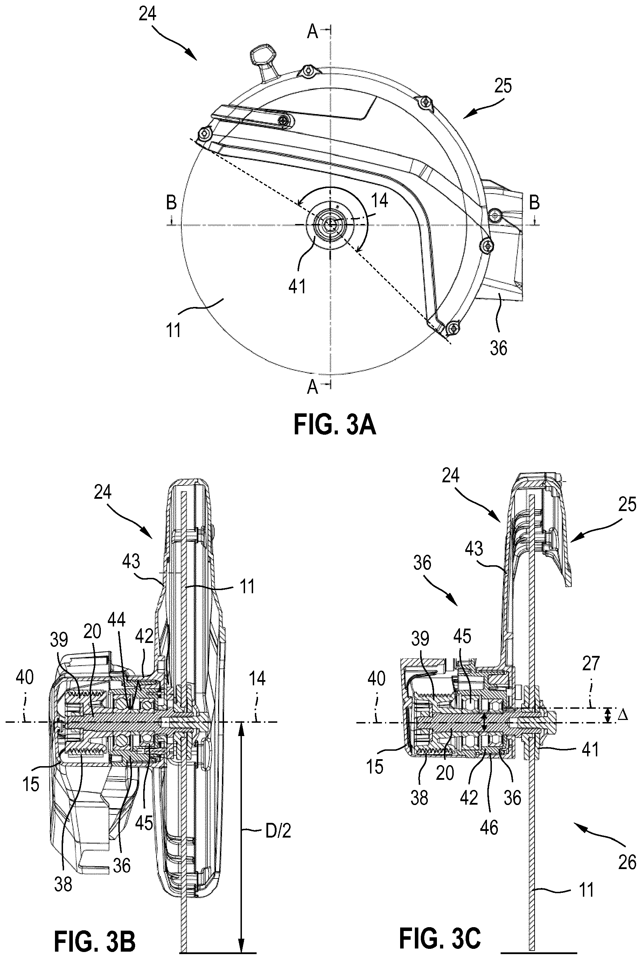

**FIGN. 3A-C** zeigen die Trennschleifscheibe 11 und die Schutzhaube 24 der Trennschleifmaschine 10 der FIG. 1A in einer vergrößerten Darstellung. Dabei zeigt FIG. 3A die Anordnung aus Trennschleifscheibe 11 und Schutzhaube 24 in einer Seitenansicht, FIG. 3B einen Schnitt entlang der Schnittlinie A-A in FIG. 3A und FIG. 3C einen Schnitt entlang der Schnittlinie B-B in FIG. 3A. Die Trennschleifscheibe 11 ist mittels des Flansches 41 auf der Abtriebswelle 20 befestigt und um die Drehachse 14 drehbar ausgebildet. Die Bewegung des Antriebsmotors 17 wird über den Antriebsriemen 38 und die Abtriebsscheibe 39, die drehfest auf der Abtriebswelle 20 gelagert ist, auf die Abtriebswelle 20 übertragen.

Die Schutzhaube 24 besteht aus dem Abdeckbereich 25, der die Trennschleifscheibe 11 abdeckt, und dem Bearbeitungsbereich 26, der die Trennschleifscheibe 11 für die Bearbeitung eines Werkstückes freigibt. Der Vollwinkel der Trennschleifscheibe 11 von 360 ° wird durch die Schutzhaube 24 in einen Abdeckwinkel und einen Bearbeitungswinkel unterteilt. Dabei bestimmt der Abdeckbereich 25 der Schutzhaube 24 den Abdeckwinkel und der Bearbeitungsbereich 26 der Schutzhaube 24 den Bearbeitungswinkel. Im Ausführungsbeispiel beträgt der Abdeckwinkel ca. 200 ° und der Bearbeitungswinkel ca. 160 °.

Die Abtriebswelle 20 ist über ein Lagerelement **45** am feststehenden Gehäuseteil 36 gelagert. Die Schutzhaube 24 ist am feststehenden Gehäuseteil 36 befestigt. Der Befestigungsflansch 42 der Schutzhaube 24 ist auf die Gegenkontur 44 des Gehäuseteils 36 aufgesteckt und relativ zum feststehenden Gehäuseteil 36 um die Schwenkachse 27 schwenkbar ausgebildet. Um die Schwenkbewegung der Schutzhaube 24 zu erleichtern, ist zwischen dem Befestigungsflansch 42 und der Gegenkontur 44 ein Gleitelement **46** vorgesehen, das Reibung reduziert und beispielsweise als Teflonring ausgebildet ist.

FIG. 3C zeigt die Schwenkachse 27 der Schutzhaube 24, die von der Abtriebsachse 40 der Abtriebswelle 20 verschieden ist. Die Schwenkachse 27 ist gegenüber der Abtriebsachse 40 in den Abdeckbereich 25 der Schutzhaube 24 verschoben. Der Abstand Δ zwischen der Schwenkachse 27 und der Abtriebsachse 40 ist im Ausführungsbeispiel grösser als der halbe Durchmesser **d** der Abtriebswelle 20.

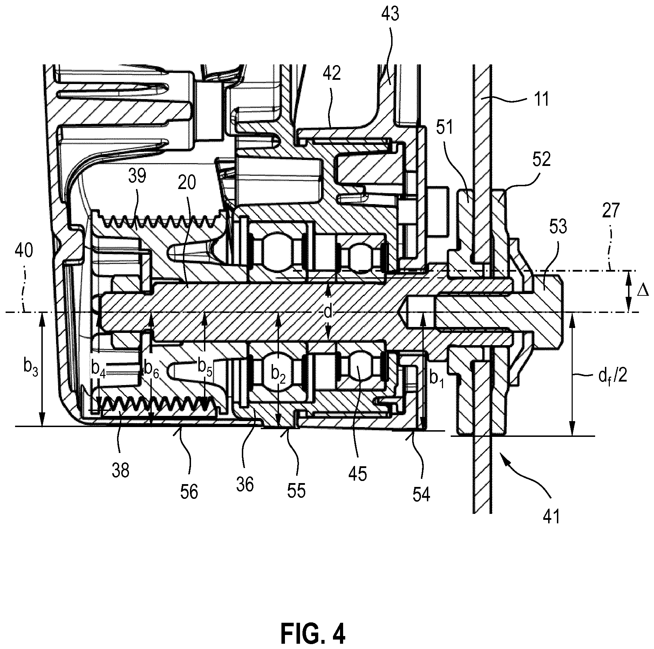

**FIG. 4** zeigt einen vergrösserten Ausschnitt des in FIG. 3C dargestellten zweiten Schnittes entlang der Schnittlinie B-B in FIG. 3A. Der Ausschnitt zeigt die Abtriebswelle 20 und den Flansch 41, mit dem die Trennschleifscheibe 11 auf der Abtriebswelle 20 befestigt wird.

Der Flansch 41 ist mehrteilig ausgebildet und umfasst ein erstes Flanschteil **51,** ein zweites Flanschteil **52** und eine Werkzeugschraube **53.** Zur Montage der Trennschleifscheibe 11 wird das erste Flanschteil 51 auf die Abtriebswelle 20 aufgesteckt oder aufgeschraubt, die Trennschleifscheibe 11 wird auf das erste Flanschteil 51 aufgesteckt und das zweite Flanschteil 52 wird montiert. Mittels der Werkzeugschraube 53 wird die Trennschleifscheibe 11 zwischen der ersten und zweiten Flanschhälfte 51, 52 geklemmt.

Für Trennschleifmaschinen mit einem Verbrennungsmotor definieren die Europäische Norm EN ISO 19432:2012, die US-Norm ANSI B175.4-2013 und entsprechende Normen in anderen Ländern für den Flansch 41 in Abhängigkeit vom Typ der Trennschleifscheibe 11 (Diamant-Trennschleifscheibe oder abrasive Trennschleifscheibe) und vom Scheibendurchmesser D der Trennschleifscheibe 11 (D ≤ 250 mm, 250 mm < D ≤ 300 mm, 300 mm < D ≤ 350 mm und 350 mm < D) einen Mindestflanschdurchmesser **dₘᵢₙ.** Der Mindestflanschdurchmesser dₘᵢₙ beträgt für Diamant-Trennschleifscheiben: dₘᵢₙ = 37.5 mm für D ≤ 250 mm, dₘᵢₙ = 45 mm für 250 mm < D ≤ 300 mm, dₘᵢₙ = 52.5 mm für 300 mm < D ≤ 350 mm und dₘᵢₙ = 60 mm für 350 mm < D. Der Mindestflanschdurchmesser dₘᵢₙ beträgt für abrasive Trennschleifscheiben: dₘᵢₙ = 63.5 mm für D ≤ 250 mm, dₘᵢₙ = 75 mm für 250 mm < D ≤ 300 mm, dₘᵢₙ = 87.5 mm für 300 mm < D ≤ 350 mm und dₘᵢₙ = 100 mm für 350 mm < D.

Die maximale Schnitttiefe **tₘₐₓ,** die die Trennschleifscheibe 11 in einem Werkstück erzielen kann, wird dann erzielt, wenn der Flanschdurchmesser d_{f} des Flansches 41 dem Mindestflanschdurchmesser dₘᵢₙ entspricht und keine Komponenten der Trennschleifmaschine 10 die Schnitttiefe zusätzlich begrenzen. Dabei ist die maximale Schnittschnitte tₘₐₓ durch die halbe Differenz aus dem Scheibendurchmesser D der Trennschleifscheibe 11 und dem Mindestflanschdurchmesser dₘᵢₙ des Flansches 41 definiert: tₘₐₓ = ½ * (D - dₘᵢₙ). Die maximale Schnitttiefe tₘₐₓ beträgt bei Trennschleifmaschinen 10 mit Verbrennungsmotor und einer Diamant-Trennschleifscheibe: tₘₐₓ = 106.25 mm für D = 250 mm, tₘₐₓ = 127.5 mm für D = 300 mm, tₘₐₓ = 148.75 mm für D = 350 mm und tₘₐₓ = 170 mm für D = 400 mm. Die maximale Schnitttiefe tₘₐₓ beträgt bei Trennschleifmaschinen mit Verbrennungsmotor und einer abrasiven Trennschleifscheibe: tₘₐₓ = 93.25 mm für D = 250 mm, tₘₐₓ = 112.5 mm für D = 300 mm, tₘₐₓ = 131.25 mm für D = 350 mm und tₘₐₓ = 150 mm für D = 400 mm.

Die Schnittschnitte **t** der Trennschleifscheibe 11 wird neben dem Flanschdurchmesser d_{f} des Flansches 41 durch die Außenkonturen der Komponenten der Trennschleifmaschine 10 im Bearbeitungsbereich 26 der Schutzhaube 24 festgelegt. Zu den Außenkonturen gehören eine erste Außenkontur **54** der Schutzhaube 24, eine zweite Außenkontur **55** des tragenden Gehäuseteils 36 und eine dritte Außenkontur **56** des Riemenantriebs 19. Die Außenkonturen 54, 55, 56 sind so gestaltet, dass deren Maximalabstände **b** zur Abtriebsachse 40 in einem Outcut-Winkel θ kleiner oder gleich dem halben Mindestflanschdurchmesser dₘᵢₙ sind. Die erste Außenkontur 54 der Schutzhaube 24 weist im Outcut-Winkel einen ersten Maximalabstand **b₁** zur Abtriebsachse 40 auf, die zweite Außenkontur 55 des tragenden Gehäuseteils 36 weist im Outcut-Winkel einen zweiten Maximalabstand **b₂** zur Abtriebsachse 40 auf und die dritte Außenkontur 56 des Riemenantriebs 19 weist im Outcut-Winkel einen dritten Maximalabstand **b₃** zur Abtriebsachse 40 auf. Als Maximalabstand b einer Komponente ist der maximale Abstand der Außenkontur zur Abtriebsachse 40 im Outcut-Winkel θ definiert.

Die Bedingung, dass der Maximalabstand b₃ des Riemenantriebs 19 zur Abtriebsachse 40 kleiner oder gleich dem halben Mindestflanschdurchmesser dₘᵢₙ ist, muss im Outcut-Winkel θ für sämtliche Teilkomponenten des Riemenantriebs 19 gelten. Der Riemenantrieb 19 besteht im Bereich der Abtriebswelle 20 aus der Abtriebsscheibe 39, dem Antriebsriemen 38 und der Abdeckung 15. Die Abtriebsscheibe 39 weist im Outcut-Winkel θ einen vierten Maximalabstand **b₄** zur Abtriebsachse 40 auf, der Antriebsriemen 38 weist im Outcut-Winkel θ einen fünften Maximalabstand **b₅** zur Abtriebsachse 40 auf und die Abdeckung 15 weist im Outcut-Winkel θ einen sechsten Maximalabstand **b₆** zur Abtriebsachse 40 auf.

Da der Antriebsriemen 38 auf der Abtriebsscheibe 39 angeordnet ist und im Ausführungsbeispiel die Abtriebsscheibe 39 gegenüber dem Antriebsriemen 38 nicht vorsteht, ist der vierte Maximalabstand b₄ der Abtriebsscheibe 39 zur Abtriebsachse 40 im Outcut-Winkel kleiner als der fünfte Maximalabstand b₅ des Antriebsriemens 38. Wenn die Bedingung, dass der Maximalabstand im Outcut-Winkel θ kleiner oder gleich dem halben Mindestflanschdurchmesser dₘᵢₙ ist, für den Antriebsriemen 38 erfüllt ist, ist die Bedingung auch für die Abtriebsscheibe 39 erfüllt. Bei einer beliebigen Gestaltung der Abtriebsscheibe 39 und des Antriebsriemens 38 muss die Bedingung, dass der Maximalabstand im Outcut-Winkel θ kleiner oder gleich dem halben Mindestflanschdurchmesser dₘᵢₙ ist, für die Abtriebsscheibe 39 und den Antriebsriemen 38 erfüllt sein.

Die Abdeckung 15 hat die Aufgabe, den Riemenantrieb 19 abzudecken und überdeckt im Bereich der Abtriebswelle 20 die Abtriebsscheibe 39 und den Antriebsriemen 38. Im Ausführungsbeispiel sind die Abtriebsscheibe 39 und der Antriebsriemen 38 vollständig von der Abdeckung 15 abgedeckt. Wenn die Bedingung, dass der Maximalabstand im Outcut-Winkel θ kleiner oder gleich dem halben Mindestflanschdurchmesser dₘᵢₙ ist, für die Abdeckung 15 erfüllt ist, ist die Bedingung auch für die Abtriebsscheibe 39 und den Antriebsriemen 38 erfüllt.

Der dritte Maximalabstand b₃ des Riemenantriebs 19 zur Abtriebsachse 40 entspricht im Ausführungsbeispiel dem sechsten Maximalabstand be der Abdeckung 15 zur Abtriebsachse 40. Bei einer beliebigen Gestaltung der Abtriebsscheibe 39, des Antriebsriemens 38 und der Abdeckung 15 muss die Bedingung, dass der Maximalabstand im Outcut-Winkel kleiner oder gleich dem halben Mindestflanschdurchmesser dₘᵢₙ ist, für die Abdeckung 15, die Abtriebsscheibe 39 und den Antriebsriemen 38 erfüllt sein.

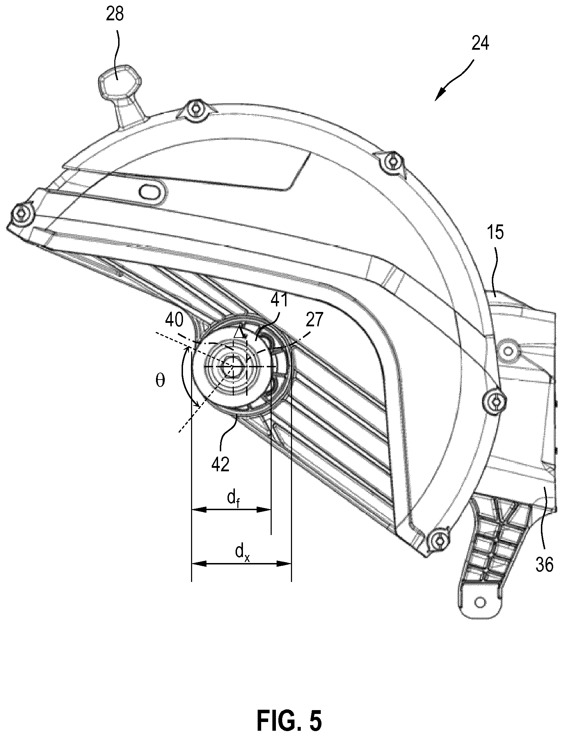

**FIG. 5** zeigt die Schutzhaube 24 der Trennschleifmaschine 10 ohne Trennschleifscheibe 11 in einer Schwenkposition, die der Schwenkposition der Schutzhaube 24 in FIG. 3A entspricht. Die Schutzhaube 24 ist mittels des Befestigungsflansches 42 am feststehenden Gehäuseteil 36 um die Schwenkachse 27 schwenkbar gelagert. Der Befestigungsflansch 42 ist kreisförmig ausgebildet und weist einen Durchmesser **dₓ** auf. Dabei ist der Durchmesser dₓ des Befestigungsflansches 42 eine Größe, die im Wesentlichen durch die Größe und das Gewicht der Schutzhaube 24 festgelegt ist.

Die Schwenkachse 27 der Schutzhaube 24 ist von der Abtriebsachse 40 der Abtriebswelle 20 verschieden. Dabei ist die Schwenkachse 27 gegenüber der Abtriebsachse 40 in den Abdeckbereich 25 der Schutzhaube 24 verschoben. Der Vollwinkel der Trennschleifscheibe 11 von 360 ° wird durch die Schutzhaube 24 in den Abdeckwinkel und den Bearbeitungswinkel unterteilt, wobei der Abdeckwinkel ca. 200 ° und der Bearbeitungswinkel ca. 160 ° beträgt. Der Outcut-Winkel θ liegt innerhalb des Bearbeitungswinkels der Trennschleifscheibe 11 und beträgt im Ausführungsbeispiel ca. 70 °.

Die Lagerung der Schutzhaube 24 im Outcut-Winkel θ ist aufgrund des begrenzten Aufnahmebereichs besonders kritisch. Die Schutzhaube 24 weist den Befestigungsflansch 42 auf, der auf die Gegenkontur 44 des tragenden Gehäuseteils 36 aufgesteckt wird. Fällt die Schwenkachse 27 der Schutzhaube 24 mit der Abtriebsachse 40 der Abtriebswelle 20 zusammen, ist der Durchmesser dₓ des Befestigungsflansches 42 durch den Flanschdurchmesser d_{f} begrenzt. Je kleiner der Flanschdurchmesser d_{f} ausgewählt wird, umso kleiner ist der Aufnahmebereich für die Anordnung und Lagerung der Komponenten. Wenn der Flanschdurchmesser d_{f} des Flansches 41 dem Mindestflanschdurchmesser dₘᵢₙ entspricht, steht der kleinste Aufnahmebereich für die Anordnung und Lagerung der Komponenten zur Verfügung.

Durch die Verschiebung der Schwenkachse 27 in den Abdeckbereich 25 der Schutzhaube 24 kann der Durchmesser dₓ des Befestigungsflansches 42 grösser als der Flanschdurchmesser d_{f} des eingesetzten Flansches 41 ausgewählt werden. Der Abstand Δ zwischen der Schwenkachse 27 und der Abtriebsachse 40 wird grösser oder gleich der halben Differenz aus dem Durchmesser dₓ des Befestigungsflansches 42 und dem Flanschdurchmesser d_{f} ausgewählt. In diesem Fall befindet sich der Befestigungsflansch 42 der Schutzhaube 24 im Aufnahmebereich, der durch den Flanschdurchmesser d_{f} definiert ist.

## Patentansprüche

1. Tragbare, handgeführte Trennschleifmaschine (10), aufweisend:
▪ ein tragendes Gehäuseteil (36),
▪ eine Trennschleifscheibe (11) mit einem Scheibendurchmesser (D),
▪ eine Abtriebswelle (20), die am Gehäuseteil (36) mittels eines Lagerelementes (45) um eine Abtriebsachse (40) drehbar gelagert ist,
▪ ein Antriebsmotor (17) und eine Übertragungseinrichtung (19), die den Antriebsmotor (17) mit der Abtriebswelle (20) verbindet, wobei die Übertragungseinrichtung (19) am Gehäuseteil (36) angeordnet ist,
▪ einen Flansch (41) mit einem Flanschdurchmesser (d_{f}), wobei die Trennschleifscheibe (11) mittels des Flansches (41) drehfest auf der Abtriebswelle (20) anordbar ist, und
▪ eine Schutzhaube (24) mit einem Abdeckbereich (25), der die Trennschleifscheibe (11) zumindest teilweise abdeckt, und einem Bearbeitungsbereich (26), der die Trennschleifscheibe (11) freigibt, wobei die Schutzhaube (24) am Gehäuseteil (36) um eine Schwenkachse (27) schwenkbar gelagert ist,
**dadurch gekennzeichnet, dass** die Schwenkachse (27) der Schutzhaube (24) von der Abtriebsachse (40) der Abtriebswelle (20) um einen Abstand (Δ) verschoben ist und die Schwenkachse (27) gegenüber der Abtriebsachse (40) in den Abdeckbereich (25) der Schutzhaube (24) verschoben ist.

2. Trennschleifmaschine nach Anspruch 1, **dadurch gekennzeichnet, dass** die Schutzhaube (24) einen Befestigungsflansch (42) mit einem Durchmesser (dₓ) aufweist und der Abstand (Δ) zwischen der Schwenkachse (27) und der Abtriebsachse (40) grösser oder gleich der halben Differenz aus dem Durchmesser (dₓ) des Befestigungsflansches (42) und dem Flanschdurchmesser (d_{f}) ist.

3. Trennschleifmaschine nach einem der Ansprüche 1 oder 2, **dadurch gekennzeichnet, dass** die Schutzhaube (24) einen ersten Maximalabstand (b₁), das tragende Gehäuseteil (36) einen zweiten Maximalabstand (b₂) und die Übertragungseinrichtung (19) einen dritten Maximalabstand (b₃) zur Abtriebsachse (40) über einen Outcut-Winkel (θ)aufweisen, wobei der erste, zweite und dritte Maximalabstand (b₁, b₂, b₃) kleiner als der halbe Flanschdurchmesser (d_{f}) oder gleich dem halben Flanschdurchmesser (d_{f}) sind.

4. Trennschleifmaschine nach Anspruch 3, **dadurch gekennzeichnet, dass** die Übertragungseinrichtung (19) eine Abtriebsscheibe (39), die auf der Abtriebswelle (20) angeordnet ist, und ein Übertragungselement (38), das eine Bewegung des Antriebsmotors (17) auf die Abtriebsscheibe (39) überträgt, aufweist, wobei die Abtriebsscheibe (39) einen vierten Maximalabstand (b₄) und das Übertragungselement (38) einen fünften Maximalabstand (b₅) zur Abtriebsachse (40) über den Outcut-Winkel (θ)aufweisen, wobei der vierte und fünfte Maximalabstand (b₄, b₅) kleiner als der halbe Flanschdurchmesser (d_{f}) oder gleich dem halben Flanschdurchmesser (d_{f}) sind.

5. Trennschleifmaschine nach Anspruch 4, **dadurch gekennzeichnet, dass** die Übertragungseinrichtung (19) eine Abdeckung (15) aufweist, wobei die Abdeckung (15) über den Outcut-Winkel (θ) einen sechsten Maximalabstand (b₆) zur Abtriebsachse (40) aufweist, der kleiner als der halbe Flanschdurchmesser (d_{f}) oder gleich dem halben Flanschdurchmesser (d_{f}) ist.

6. Trennschleifmaschine nach einem der Ansprüche 1 bis 5, **dadurch gekennzeichnet, dass** der Flanschdurchmesser (d_{f}) des Flansches (41) einem Mindestflanschdurchmesser (dₘᵢₙ) entspricht, wobei der Mindestflanschdurchmesser (dₘᵢₙ) abhängig vom Typ des Antriebsmotors (17) sowie anhängig von Typ, Scheibendurchmesser (D) und Bohrungsdurchmesser (QJ) der Trennschleifscheibe (11) ist.

7. Trennschleifmaschine nach Anspruch 6, **dadurch gekennzeichnet, dass** der Antriebsmotor (17) als Verbrennungsmotor ausgebildet ist und die Trennschleifscheibe (11) als Diamant-Trennschleifscheibe oder als abrasive Trennschleifscheibe ausgebildet ist.

8. Trennschleifmaschine nach Anspruch 6, **dadurch gekennzeichnet, dass** der Antriebsmotor (17) als Elektromotor ausgebildet ist und die Trennschleifscheibe (11) als Diamant-Trennschleifscheibe oder als gebundene verstärkte Trennschleifscheibe ausgebildet ist.

## Claims

1. Portable, hand-held cutting-off machine (10), having:
▪ a supporting housing part (36),
▪ a cutting-off disc (11) with a disc diameter (D),
▪ an output shaft (20), which is mounted on the housing part (36) by means of a bearing element (45) such that it can rotate about an output axis (40),
▪ a drive motor (17) and a transmission device (19), which connects the drive motor (17) to the output shaft (20), the transmission device (19) being arranged on the housing part (36),
▪ a flange (41) with a flange diameter (d_{f}), wherein the cutting-off disc (11) can be arranged co-rotationally on the output shaft (20) by means of the flange (41), and
▪ a protective hood (24) having a covering area (25) which at least partly covers the cutting-off disc (11), and a machining area (26) which exposes the cutting-off disc (11), the protective hood (24) being mounted on the housing part (36) such that it can pivot about a pivot axis (27),
**characterized in that** the pivot axis (27) of the protective hood (24) is displaced from the output axis (40) of the output shaft (20) by a distance (Δ), and the pivot axis (27) is displaced with respect to the output axis (40) into the covering area (25) of the protective hood (24).

2. Cutting-off machine according to Claim 1, **characterized in that** the protective hood (24) has a fastening flange (42) with a diameter (dₓ), and the distance (Δ) between the pivot axis (27) and the output axis (40) is greater than or equal to half the difference between the diameter (dₓ) of the fastening flange (42) and the flange diameter (d_{f}).

3. Cutting-off machine according to either of Claims 1 and 2, **characterized in that** the protective hood (24) has a first maximum distance (b₁), the supporting housing part (36) has a second maximum distance (b₂) and the transmission device (19) has a third maximum distance (b₃) from the output axis (40) over an outcut angle (θ), wherein the first, second and third maximum distance (b₁, b₂, b₃) are less than half the flange diameter (d_{f}) or equal to half the flange diameter (d_{f}).

4. Cutting-off machine according to Claim 3, **characterized in that** the transmission device (19) has an output disc (39), which is arranged on the output shaft (20), and a transmission element (38), which transmits a movement of the drive motor (17) to the output disc (39), wherein the output disc (39) has a fourth maximum distance (b₄) and the transmission element (38) has a fifth maximum distance (b₅) from the output axis (40) over the outcut angle (θ), wherein the fourth and fifth maximum distance (b₄, b₅) are less than half the flange diameter (d_{f}) or equal to half the flange diameter (d_{f}).

5. Cutting-off machine according to Claim 4, **characterized in that** the transmission device (19) has a cover (15), wherein the cover (15) has a sixth maximum distance (b₆) from the output axis (40) over the outcut angle (θ) which is less than half the flange diameter (d_{f}) or equal to half the flange diameter (d_{f}).

6. Cutting-off machine according to one of Claims 1 to 5, **characterized in that** the flange diameter (d_{f}) of the flange (41) corresponds to a minimum flange diameter (dₘᵢₙ), wherein the minimum flange diameter (dₘᵢₙ) depends on the type of drive motor (17) and depends on the type, disc diameter (D) and bore diameter (QJ) of the cutting-off disc (11).

7. Cutting-off machine according to Claim 6, **characterized in that** the drive motor (17) is formed as an internal combustion engine and the cutting-off disc (11) is formed as a diamond cutting-off disc or as an abrasive cutting-off disc.

8. Cutting-off machine according to Claim 6, **characterized in that** the drive motor (11) is formed as an electric motor and the cutting-off disc (11) is formed as a diamond cutting-off disc or as a bonded, reinforced cutting-off disc.

## Revendications

1. Tronçonneuse portative manuelle (10), présentant :
- une partie de carter portante (36),
- un disque à tronçonner (11) avec un diamètre de disque (D),
- un arbre de sortie (20) qui est monté sur la partie de carter (36) au moyen d'un élément de palier (45) de manière rotative autour d'un axe de sortie (40),
- un moteur d'entraînement (17) et un dispositif de transmission (19), qui relie le moteur d'entraînement (17) à l'arbre de sortie (20), le dispositif de transmission (19) étant agencé sur la partie de carter (36),
- une bride (41) avec un diamètre de bride (d_{f}), le disque à tronçonner (11) pouvant être agencé sur l'arbre de sortie (20) au moyen de la bride (41) de manière immobile en rotation, et
- un capot de protection (24) avec une zone de recouvrement (25) qui recouvre au moins partiellement le disque à tronçonner (11) et une zone d'usinage (26) qui expose le disque à tronçonner (11), le capot de protection (24) étant monté sur la partie de carter (36) de manière pivotante autour d'un axe de pivotement (27),
**caractérisée en ce que** l'axe de pivotement (27) du capot de protection (24) est décalé de l'axe de sortie (40) de l'arbre de sortie (20) d'une distance (Δ) et l'axe de pivotement (27) est décalé par rapport à l'axe de sortie (40) dans la zone de recouvrement (25) du capot de protection (24).

2. Tronçonneuse selon la revendication 1, **caractérisée en ce que** le capot de protection (24) présente une bride de fixation (42) avec un diamètre (dₓ) et la distance (Δ) entre l'axe de pivotement (27) et l'axe de sortie (40) est supérieure ou égale à la moitié de la différence entre le diamètre (dₓ) de la bride de fixation (42) et le diamètre de bride (d_{f}).

3. Tronçonneuse selon l'une quelconque des revendications 1 ou 2, **caractérisée en ce que** le capot de protection (24) présente une première distance maximale (b₁), la partie de carter portante (36) une deuxième distance maximale (b₂) et le dispositif de transmission (19) une troisième distance maximale (b₃) par rapport à l'axe de sortie (40) sur un angle de coupe (θ), les première, deuxième et troisième distances maximales (b₁, b₂, b₃) étant inférieures à la moitié du diamètre de bride (d_{f}) ou égaux à la moitié du diamètre de bride (d_{f}).

4. Tronçonneuse selon la revendication 3, **caractérisée en ce que** le dispositif de transmission (19) présente un disque de sortie (39) qui est agencé sur l'arbre de sortie (20), et un élément de transmission (38) qui transmet un mouvement du moteur d'entraînement (17) au disque de sortie (39), le disque de sortie (39) présentant une quatrième distance maximale (b₄) et l'élément de transmission (38) une cinquième distance maximale (b₅) par rapport à l'axe de sortie (40) sur l'angle de coupe (θ), les quatrième et cinquième distances maximales (b₄, b₅) étant plus petites que la moitié du diamètre de bride (d_{f}) ou égales à la moitié du diamètre de bride (d_{f}).

5. Tronçonneuse selon la revendication 4, **caractérisée en ce que** le dispositif de transmission (19) présente un couvercle (15), le couvercle (15) présentant, sur l'angle de coupe (θ), une sixième distance maximale (b₆) par rapport à l'axe de sortie (40), qui est inférieure à la moitié du diamètre de bride (d_{f}) ou égale à la moitié du diamètre de bride (d_{f}).

6. Tronçonneuse selon l'une quelconque des revendications 1 à 5, **caractérisée en ce que** le diamètre de bride (d_{f}) de la bride (41) correspond à un diamètre de bride minimal (dₘᵢₙ), le diamètre de bride minimal (dₘᵢₙ) dépendant du type du moteur d'entraînement (17) ainsi que du type, du diamètre de disque (D) et du diamètre d'alésage (QJ) du disque à tronçonner (11).

7. Tronçonneuse selon la revendication 6, **caractérisée en ce que** le moteur d'entraînement (17) est configuré sous forme de moteur à combustion interne et le disque à tronçonner (11) est configuré sous forme de disque à tronçonner diamanté ou sous forme de disque à tronçonner abrasif.

8. Tronçonneuse selon la revendication 6, **caractérisée en ce que** le moteur d'entraînement (17) est configuré sous forme de moteur électrique et le disque à tronçonner (11) est configuré sous forme de disque à tronçonner diamanté ou sous forme de disque à tronçonner lié renforcé.
